(19) Europäisches Patentamt
European Patent Office
Office européen des brevets

(11) Publication number: **0 083 074**
**B1**

(12) **EUROPEAN PATENT SPECIFICATION**

(45) Date of publication of patent specification: **18.10.89**

(51) Int. Cl.[4]: **C 08 F 10/02,** C 08 F 4/62

(21) Application number: **82111904.7**

(22) Date of filing: **22.12.82**

(54) **New catalyst components for the polymerization of ethylene and of mixtures thereof with olefins and catalysts obtained therefrom.**

(30) Priority: **24.12.81 IT 2584081**

(43) Date of publication of application:
**06.07.83 Bulletin 83/27**

(45) Publication of the grant of the patent:
**18.10.89 Bulletin 89/42**

(84) Designated Contracting States:
**AT BE DE FR GB IT NL SE**

(56) References cited:
**EP-A-0 018 737**
**FR-A-2 428 056**
**US-A-3 953 414**
**US-A-4 218 339**

(73) Proprietor: **AUSIMONT S.r.l.**
**31, Foro Buonaparte**
**I-20100 Milano (IT)**

(72) Inventor: **Cuffiani, Illaro**
**33, Via Bagaro**
**Ferrara (IT)**
Inventor: **Longi, Paolo, Dr.**
**5, Via Inama**
**Milan (IT)**
Inventor: **Zucchini, Umberto**
**11, Via G. Leopardi**
**Ferrara (IT)**
Inventor: **Pennini, Gianni, Dr.**
**190, Via Ladino**
**Porotto Ferrara (IT)**

(74) Representative: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

**EP 0 083 074 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Object of this invention is a process for preparing new catalyst components for the polymerization of ethylene and of the mixtures thereof with olefins and the catalysts obtained therefrom.

More particularly, the invention refers to a process of preparing new liquid catalytic components used in emulsion or dispersion in an inert liquid medium and to catalysts deriving therefrom for the polymerization of ethylene and of mixtures thereof with alpha-olefins and/or with polyenes containing at least two double bonds.

It is known that the coordination catalysts commonly used in the industrial practice are heterogeneous systems obtained by reaction of a transition metal compound (generally a Ti halide) with an organometal compound of the metals of Groups I and III of the Periodic System.

The transition metal compound used for the preparation of the catalyst is generally a solid insoluble in the hydrocarbon polymerization medium or is a liquid soluble in said medium.

Homogeneous coordination catalysts (soluble in the polymerization medium at least before the polymerization is started) are also known.

These systems, however, have not been adopted in the industrial practice because of the fact that the activity thereof, that at the beginning is also very high, decreases rapidly and this does not allow to obtain high polymer yields.

Within the field of heterogeneous catalysts, supported catalysts have been adopted in the industrial practice already since some time, which are endowed of so high activity as to allow to avoid the expensive depuration treatments of the polymer from the catalytic residues. These catalysts are generally obtained from a catalyst component comprising a titanium compound supported on a magnesium halide in active form.

In the modern industrial processes using "high yield" supported catalysts requirement is felt of having available catalysts with controlled morphology and particle size, capable to yield a polymer in form of particles reproducing the morphology and the particle size of the catalyst and furthermore endowed with high flowability and bulk density.

A catalyst having these characteristics shows advantages not only during polymerization step and makes easier the subsequent operations of transfer and/or treatment of the polymer but can also allow to avoid the granulation step of polymer. This operation, as it is known, requires large amounts of energy.

The methods employed until now for the preparation of catalysts having a controlled morphology and/or particle size are based on operations expensive per se, which comprise the preformation of a precursor of the catalytic component in form of particles having a controlled morphology and the subsequent transformation of these particles to obtain the true catalyst component or the precipitation of the catalyst component under conditions in general very critical, followed by the steps of separation, washing and drying of the solid.

According to other methods, precursors of the catalyst component in the melted state are emulsified in an inert immiscible liquid and the emulsion is then subjected to quenching to obtain the solidification of the dispersed liquid phase which is subsequently treated for the transformation thereof to catalyst component.

Examples of these methods are described in the applicant's US—A—3,953,414 according to which the precursor is quenched before being transformed into the true catalyst component, and BE—A—878,347. According to EP—A—18 737 the precursor of an adduct of Mg-dihalide with an alcohol has to be transformed to a solid phase before further treatment.

From US—A—42 18 339 catalyst components for the polymerization of olefins are known comprising among others a magnesium compound and a compound of Ti, V or Zr. However, no emulsion is involved for its preparation. The same is true for the preparation of the catalyst component of FR—A—24 28 056.

Coordination catalysts are not known hitherto wherein the component comprising the transition metal compound in the form of a liquid immiscible in the conventional polymerization solvents, is employed in emulsion or dispersion in said liquid medium.

It has been now unexpectedly found that it is possible to obtain polymers of ethylene and copolymers thereof with olefins in the form of particles having controlled morphology and/or particle size, by carrying out the polymerization with catalysts obtained from emulsions or dispersions in an inert liquid medium or in an inert gas phase of a liquid phase immiscible in the liquid medium comprising a compound or compositions containing a titanium compound, that are immiscible, in the liquid state, with the normal aliphatic hydrocarbons.

The catalyst components prepared according to the invention consist in particular of emulsions or dispersions in an inert liquid medium or in an inert gas phase of a liquid phase comprising a magnesium halide and compounds of titanium, that are immiscible in the normal aliphatic hydrocarbons (hexane, heptane and the like).

The invention comprises also the preparation of liquid catalyst components by subjecting to transformation post-reactions in order to obtain the true catalytic component emulsions or dispersions in an inert liquid medium or in an inert gas phase of precursors of catalyst components, the precursors being immiscible, in the liquid state, in the normal aliphatic hydrocarbons.

According to another aspect of the invention the titanium compound immiscible in aliphatic

hydrocarbons or the liquid precursor are made to be adsorbed on solid porous supports having a controlled morphology and/or particle size: the support is then used in suspension in an inert liquid medium immiscible with the adsorbed liquid phase or dispersed in gas phase.

Examples of solid inert supports are silica, alumina and polymers in form of porous particles having controlled morphology and/or size.

As already indicated, any titanium compound that is immiscible in the liquid state with aliphatic hydrocarbons is suitable for the preparation of the emulsions or dispersions forming the catalytic components of the inventimn.

Similarly, any precursor of the catalytic components which is immiscible, in the liquid state, with the aliphatic hydrocarbons may be used to prepare the emulsions or dispersions useful for the preparation of the catalytic components, such as the reaction product of an anhydrous magnesium halide, in particular $MgCl_2$ or a Mg dialkyl or a Grignard reagent, with an anhydrous aluminum halide, in particular $AlCl_3$, in an aromatic hydrocarbon in particular toluene, in the presence of a halogenated hydrocarbon, preferably 1,2-dichloroethane. To the oily liquid thus obtained (non immiscible in the same aromatic hydrocarbon), a titanium compound, in particular $TiCl_4$ is added. An oily liquid is obtained that is immiscible in the normal aliphatic hydrocarbons.

More particularly, the Mg and Al halides and the aromatic hydrocarbon are caused to react at the reflux temperature of the hydrocarbon in the Mg/Al/toluene molar ratio of 1:2:12.

To this suspension the halogenated hydrocarbon is added in the ratio of about 2 mols per mol of Mg halide and it is heated until an oily liquid is formed. Then the Ti compound is added in a Ti halide/Mg halide comprised in general between 0.1:1 and 1:1.

In the above preparation the halogenated hydrocarbon can be replaced by anhydrous gaseous hydrochloric acid or by a normally liquid halogenated titanium compound. For example $TiCl_4$ is particularly suitable to this purpose. In the latter case no further addition of the titanium compound is needed to prepare the catalyst component.

According to another embodiment of the invention the Mg dihalide can be added last and solubilized in the mixture obtained by first mixing $AlCl_3$ and toluene and by thereafter treating the mixture with the halogenated hydrocarbon or gaseous HCl or $TiCl_4$.

The oily liquid that is obtained before the addition of the Ti compound is in itself a precursor of the catalytic components that can be emulsified and the emulsion can be treated for the transformation thereof to the catalyst component.

In the above indicated preparation the Al trihalide can be substituted by an alkyl Al-dihalide, the toluene by benzene, xylene and by similar aromatic hydrocarbons; 1,2-dichloroethane can be substituted by $C_2H_5Cl$, $C_3H_7Cl$, n-$C_4H_9Cl$, s-$C_4H_9Cl$, t-$C_4H_9Cl$, $C_6H_5Cl$, $CHCl_3$, $C_6H_5CH_2Cl$, $CH_2Cl_2$ and by alike alkyl, aryl or arylalkyl halides.

Another method of preparation consists in dissolving an anhydrous Mg halide in a Ti tetraalcoholate, in particular Ti tetrabutylate, and in flowing an anhydrous gaseous hydrohalogenic acid through the solution until an oil phase is separated. According to a modification of the above described method, the hydrohalogenic acid can be replaced by an acyl chloride, in particular acetyl chloride. The butyl acetate that is formed is partly removed until formation of an oily liquid.

Other compounds suitable for the preparation of the catalytic components according to the invention can be selected from the compounds having the formula:

$$MgX_2 \cdot TiX_pY_q \cdot n\ ED$$

that in the liquid state are immiscible with aliphatic hydrocarbons. In the formula X is a halogen atom; Y is a OR radical in which R is an alkyl, cycloalkyl or aryl group containing from 1 to 18 carbon atoms, p is a number from 1 to 4; q is a number from zero to 3; p+q=4; n is a number from 3 to 6; ED is an electron-donor compound selected in particular from the esters of carboxylic aliphatic or aromatic acids.

Examples of these compounds are:

$MgCl_2 \cdot TiCl_4 \cdot 4\ AC$ ($AC=CH_3COOC_2H_5$),
$MgCl_2 \cdot TiCl_4 \cdot 4\ EB$ (EB=ethylbenzoate),
$MgCl_2 \cdot TiCl_2(OC_2H_5)_2 \cdot 4C_2H_5OH$; $MgCl_2 \cdot TiCl_4 \cdot 5POCl_3$.

These compounds are prepared according to known methods, by dissolving the Mg halide in the ED compound, by adding to the solution the stoichiometric amount of the Ti compound and then by causing the reaction to take place at reflux. The excess of the ED compounds is at the end removed by evaporation.

As already indicated, the compounds or the compositions containing the titanium compounds, which form the emulsions or dispersions of the invention, can be subjected to modification or transformation reactions before that the emulsions or dispersions are employed as catalyst component. Said reactions comprise the reactions with electron-donor compounds, in particular esters, Al-alkyl compounds and silicon compounds.

The emulsion is then made to react, according to known methods, with reagents capable to transform the adduct in active catalytic components.

Known transformation reactions to catalyst components are those wherein the adduct is made to react with $TiCl_4$ or with an Al-alkyl compound or with halogenated silicon compounds such as $SiCl_4$ and halosilanes. Examples of these reactions are described in the Belgian patents 857,574 and 878,347.

As already indicated, the oily liquid obtained from the reaction of $MgCl_2$, $AlCl_3$, toluene and dichloroethane can be utilized as precursor and made to react in emulsion or dispersion with substances capable to transform it to the catalyst component. For example it can be reacted with $TiCl_4$ and alkyl hydropolysiloxanes, according to known methods.

The emulsifying of the liquid titanium compounds as well as that of the precursors is carried out according to known techniques.

The liquid compounds can be dispersed in the same hydrocarbon medium used in polymerization, optionally in the presence of surfactants of known type selected from those that are inert or poorly reactive toward the catalyst components. In the processes in gas phase, the titanium compound can be dispersed directly in the gas phase containing the co-catalyst.

Preferably, however, the titanium compound is dispersed previously into an oil of parafinic, naphthenic, aromatic or siliconic type; the resulting dispersion or emulsion is then fed to the polymerization reactor containing the co-catalyst.

Examples of these oils are silicon oil Baysilon M 100® (Bayer), vaselin O 55® (Rol), Cortis M 100® oil (Total), Circosol 2XH® oil (Sunoco) and Dutrex R55® oil (Shell).

The addition during the emulsifying of an electron-donor compound and/or of the co-catalyst in amounts in general comprised between 5 and 50% by weight on the amount of the titanium compound has beneficial effects on the morphologyc characteristics of polymer.

In some cases, in particular when the emulsions are unstable in the time or would create feeding problems, it has been found convenient to prepolymerize small amounts of ethylene or other olefin. The prepolymerization is carried out in general until a few grams of polymer per gram of catalyst component are formed.

A solid stable prepolymer is obtained having spherical and regular size particles which subsequently during the polymerization maintain or reproduce the shape while growing, thus generating polymer particles that are also regular and spherical.

The co-catalysts to be utilized together with the catalytic components prepared according to the invention are the organometal compounds of Al, preferably the not halogenated compounds, as for example $Al(C_2H_5)_3$, $Al(iC_4H_9)_3$, $Al(n\text{-}C_4H_9)_3$, $Al(C_4H_9)_2H$, $Al(C_6H_{13})_3$. The polymerization of ethylene or of mixtures thereof with alpha-olefins with these catalysts is carried out according to any of the known techniques, in the presence or the absence of hydrocarbon media, in liquid or gas phase, at temperatures preferably comprised between 0° and 200°C and by operating in general in the presence of molecular weight regulators of polymer, as hydrogen.

Al already indicated, the catalysts are used in the polymerization of both ethylene and of mixtures thereof with alpha-olefins, $C_3$—$C_{12}$, in particular butene, to obtain crystalline copolymers of ethylene containing minor amounts of polymerized alpha olefins as well as to obtain elastomeric ethylene-alphaolefin copolymers, in particular ethylene-propylene copolymers containing optionally insaturations derived from polyenes having at least two double bonds.

In using the emulsified or dispersed catalyst component prepared according to the invention, precautions have to be taken to introduce the catalyst component into the polymerization reactor in the form of the emulsion or dispersion as prepared. Means to avoid the demixing of the dispersed or emulsified liquid phase are well known in the art. For instance, the emulsified or dispersed catalyst component should be introduced into the polymerization reactor under the polymerization conditions as quickly as possible, immediately after its preparation.

As mentioned at the beginning, the advantages obtainable with the use of these catalysts are multiple. These catalysts, besides being endowed of activities in general very high (such as to not require any purification treatment of the obtained polymer from the catalytic residues), show the advantage of furnishing polymer powders endowed of excellent morphological characteristics, high bulk density and very restricted particle size distribution. Consequently, the polymers possess a so high flowability and bulk density that they can be utilized directly in the conventional operations of molding and extrusion, without having recourse previously to a costly granulation operation.

Another advantage of remarkable interest is the extreme simplicity of preparation of these catalysts, which reduces considerably the costs thereof, also with respect to other known, highly active catalysts.

The melt index E and respectively N were determined according to the ASTM methods D-1238 condition E and respectively N, measured at 190°C and expressed in g/10 minutes.

The tamped bulk density was determined according to a method described in DIN 53194.

The particle size was determined according to ASTM D 1921-63.

The flowability and the poured bulk density were determined according to ASTM D-1895-69.

The following examples are given to illustrate the invention without limiting it.

Examples 1—8

Preparation of catalytic component A

The catalyst component A used in all tests of Examples 1—8 was prepared in the conditions and with the modalities as follows.

9.5 g (0.1 mol) of anhydrous powdered magnesium chloride (water content lower than 1% by weight), 39.9 g (0.3 mol) of anhydrous aluminum trichloride, and 128 $cm^3$ of anhydrous toluene were introduced in said order into a 500 $cm^3$ flask fitted with mechanical stirrer, dropping funnel, reflux condenser and thermometer, that was previously flushed with nitrogen.

The resulting toluene suspension was heated to 110°C and maintained under stirring at this temperature for 2 hours. The mixture was then cooled to 45°C and 15.7 $cm^3$ of 1,2-dichloroethane were added thereto with the dropping funnel.

After heating at 100°C for 1 hour, a red-brownish liquid was obtained, to which, after cooling again to 45°C, 0.1 mol of $TiCl_4$ was fed.

After an additional 15 minutes stirring at 45°C, the solution obtained results to have a volume of 178 $cm^3$ and the following composition:

Ti=2.35% by weight
Al=4.5% by weight
Cl=22.75% by weight
Mg=1.2% by weight

The viscosity at 20°C was $3.5 \cdot 10^{-6}$ $m^2/s$. The density at 20°C was 1.13 $g/cm^3$.

Dispersion of catalytic component A

The apparatus for the dispersion or emulsifying of the catalytic components that was used in all examples consists of a small turbostirrer (Ultra Turrax TP 18/10 manufactured by Janke & Kunkel, Ikawerk, Staufen) turning at a speed of 12,000 r.p.m. That was inserted in a 150 $cm^3$ Keller type flask fitted with a 50 $cm^3$ graduated dropping funnel and a thermometer. The control of the temperature was carried out by immersion of the flask in a methanol/dry ice cooling system.

Prior to use, the apparatus was flushed with nitrogen. The dispersing oil, the optional additives coadjuvant for the dispersion were introduced in this order into the flask, and the catalytic component was then introduced in the time of 5 minutes under the highest stirring while simultaneously cooling and maintaining the temperature at 20°C. The stirring was then continued for another 10 minutes.

At the end of the dispersion operation and after reducing to 50% the stirring speed, the emulsion obtained was injected in the polymerization autoclave in the amounts reported in Table 1.

Polymerization of ethylene

The polymerization test of all examples was carried out in a 2.5 liter stainless steel autoclave fitted with an elicoidal blade stirrer operating at the speed of 600 r.p.m. and with an automatic thermostatic system

At the moment of introducing the catalytic dispersion the autoclave duly flushed with nitrogen contains already 1 liter of anhydrous hexane and 7.5 mMols of Al-triisobutyl that are maintained under stirring at 60°C. After introduction of the catalytic component in the hexane, the temperature was raised to 75°C, 3 bar of $H_2$ (partial pressure) were introduced and lastly the autoclave was pressurized with ethylene up to the total pressure of 14 bar.

The autoclave was then stirred for 2 hours while maintaining constant the pressure by continuous feeding of ethylene. The feed of ethylene was discontinued, the reactor was cooled to room temperature, the polymer was discharged and separated from hexane by filtration and then dried in nitrogen flow at 70°C for 8 hours.

The amounts of the reactants used in the preparation of the dispersions of the catalytic component in the different types of oil and the polymerization results are reported in Table 1.

In Example A of Table 1 are reported the results of the polymerization of ethylene with the catalytic component A as such (not subjected to emulsifying).

Examples 9—15

Preparation of the catalytic component B

The catalytic component B utilized in Examples 9—15 was prepared under the conditions and with the operating modalities as follows.

0.2 mols of anhydrous powdered magnesium chloride and 0.4 mols of titanium tetrabutylate were introduced into a 1000 $cm^3$ flask fitted with mechanical stirrer, reflux condenser, thermometer and dropping funnel. The flask was heated at 140°C for 3 hours.

The resulting solution, cooled to 60°C, was diluted with 640 $cm^3$ of anhydrous n-heptane. Then gaseous anhydrous hydrochloric acid was introduced by means of a glass tube immersed directly in the liquid phase at 20°C and under stirring, in such amount as to maintain the temperature of the system at about 30°C.

During this treatment, there takes place first a turbidness of the solution and then the separation of an oily reddish phase immiscible in heptane.

After 3 hours the feed of hydrochloric acid was interrupted and the oily suspension was heated while stirring at 60°C for 30 minutes. Said liquid suspension was transferred at room temperature to a dropping funnel and then the oily phase was separated. 206 $cm^3$ of oily liquid were obtained which had the following composition by weight:

Ti=7.4%
Mg=1.75%
Cl=22.15%
$C_4H_9OH$=45.7%

The viscosity at 20°C is of $180 \cdot 10^{-6}$ $m^2/s$ and the density at 20°C is of 1.056 $g/cm^3$. For the dispersion or emulsifying of the catalytic component B in the different types of oil and for the experimenting with it, including the polymerization tests therewith, the same operating modalities already described for the catalytic component A were adopted. The results were reported in Table 2.

In Example B of Table 2 the results of polymerization of ethylene using the catalytic component B as such (not dispersed) were reported.

TABLE 1

| Example N° | | | A | 1 | 2 | 3 | 4 | 5 | 6 | 7 | 8 |
|---|---|---|---|---|---|---|---|---|---|---|---|
| Dispersion of the catalytic component | Dispersing agent | Type | — | Baysilon M 100® oil | Baysilon M 100® oil | Baysilon M 100® oil | Baysilon M 100® oil | Vasel in OB 55® oil | Cortis M 100® oil | Circosol 2XH® oil | Dutrex R 55® oil |
| | | Viscosity at 20°C ($\cdot 10^{-6}$ $m^2/s$) | — | 140 | 140 | 140 | 140 | 55 | 500 | 91.5 | 175 (100°C) |
| | | Quantity ($cm^3$) | — | 20 | 15 | 20 | 20 | 20 | 20 | 20[(1)] | 20[(1)] |
| | Additive | Type | — | — | — | n.butyl ether | 4mM Al(iso butyl)+n. butyl ether | — | — | — | — |
| | | Quantity ($cm^3$) | — | — | — | 3 | 3 | — | — | — | — |
| | Catalytic liquid A ($cm^3$) | | — | 20 | 30 | 20 | 20 | 20 | 10 | 10[(1)] | 10[(1)] |
| Polymerization results | Dispersed catalyst used ($cm^3$) | | 0.3 | 0.5 | 0.15 | 0.3 | 0.3 | 0.3 | 0.1 | 0.15 | 0.3 |
| | Weight polymer obtained (g) | | 239 | 135 | 198 | 205 | 183 | 121 | 185 | 270 | 104 |
| | Yield (g.pol./g.Ti).$10^{-3}$ | | 30 | 20 | 75 | 55 | 49 | 30 | 209 | 203 | 39 |
| | Melt index E (g/10 min.) | | 0.21 | 0.4 | 0.45 | 0.5 | 0.21 | 0.25 | 0.35 | 0.23 | 0.14 |
| | $\frac{\text{Melt index N}}{\text{Melt index E}}$ | | 10.7 | 8.1 | 9.2 | 8 | 7.6 | 11.6 | 8.3 | 8.9 | 7.2 |
| | Tamped bulk density ($g/cm^3$) | | 0.25 | 0.39 | 0.27 | 0.41 | 0.43 | 0.27 | 0.35 | 0.23 | 0.18 |
| | Polymer morphology | Spherical polymer | NO | YES | YES | YES | YES | YES | YES | NO | YES |
| | | Particle form polymer | NO | NO | NO | NO | NO | NO | YES | YES | NO |
| | | Irregular polymer in powder | YES | NO | NO | NO | NO | YES | NO | NO | YES |

(1) Dispersion carried out at 50°C.

TABLE 2

| Example N° | | | B | 9 | 10 | 11 | 12 | 13 | 14 | 15 |
|---|---|---|---|---|---|---|---|---|---|---|
| Dispersion of the catalytic component | Dispersing agent | Type | — | Baysilon M 100® oil | Baysilon M 100® oil | Vaselin OB 55® oil | Cortis 100 M® oil | Circosol 2XH® oil | Dutrex R 55® oil | n-Heptane |
| | | Viscosity at 20°C ($\cdot 10^{-6}$ $m^2/s$) | — | 140 | 140 | 55 | 500 | 91.5 | 17.5 (100°C) | 0.57 |
| | | Quantity ($cm^3$) | — | 20 | 10 | 20 | 20 | 20 | 20 | 50 |
| | Additive | Type | — | — | Al (n-octyl)$_3$ | — | — | — | — | Fenorol 10 |
| | | Quantity ($cm^3$) | — | — | 3.7 (m.mol.) | — | — | — | — | 0.03 (g) |
| | Catalytic liquid B ($cm^3$) | | — | 20 | 20 | 10 | 10 | 10 | 10 | 10 |
| Polymerization results | Dispersion used ($cm^3$) | | 0.01 | 0.01 | 0.02 | 0.05 | 0.03 | 0.05 | 0.05 | 0.02 |
| | Weight polymer obtained (g) | | 154 | 91 | 178 | 123 | 234 | 268 | 91 | 103 |
| | Yield (g.pol./g Ti)$\times 10^{-3}$ | | 197 | 233 | 171 | 95 | 299 | 206 | 70 | 396 |
| | Melt index E (g/10 min.) | | 0.25 | 0.3 | 0.25 | 0.15 | 0.18 | 0.23 | 0.2 | 0.12 |
| | $\frac{\text{Melt index N}}{\text{Melt index E}}$ | | 8 | 8.1 | 7.8 | 8.0 | 10 | 7.4 | 8 | 7.5 |
| | Tamped bulk density ($g/cm^3$) | | 0.35 | 0.33 | 0.35 | 0.22 | 0.24 | 0.28 | 0.23 | 0.21 |
| | Polymer morphology | Spherical polymer | NO | NO | YES | YES | YES | YES | YES | YES |
| | | Particle form polymer | NO | YES | NO | YES | YES | NO | YES | YES |
| | | Irregular polymer in powder | YES | YES | NO | NO | NO | YES | NO | NO |

Examples 16 and 17

Preparation of the catalytic component C

The catalytic component C utilized in Examples 16 and 17 was obtained in the following manner.

0.2 mols of anhydrous powdered $MgCl_2$ and 0.16 mols of titanium tetrabutylate were introduced in this order into a 250 $cm^3$ flask fitted with mechanical stirrer, reflux condenser and thermometer.

The flask was heated while stirring the suspension at 140°C for 3 hours. A milky liquid was obtained, to which, after cooling to room temperature, 1.2 mols of acetyl chloride were added in 30 minutes. The obtained suspension while still under stirring was heated at boiling (73°C) for 2 hours. Then the unreacted acetyl chloride was removed by distillation. The temperature in the flask is let raise up to 125°C. At this point the residue has the appearance of an oily red-brownish mass.

It amounts to 90 $cm^3$ and has a density of 1.25 $g/cm^3$ at 20°C. The results of the polymerization tests were reported in Table 3. Test C was carried out using the catalytic component C not dispersed.

TABLE 3

<table>
<tr><th colspan="3">Example N°</th><th>C</th><th>16</th><th>17</th></tr>
<tr><td rowspan="4">Dispersion of the catalytic component</td><td rowspan="3">Dispersing agent</td><td>Type</td><td>—</td><td>Baysilon M 100® oil</td><td>Cortis M 100® oil</td></tr>
<tr><td>Viscosity at 20°C ($\cdot 10^{-6}$ $m^2/s$)</td><td>—</td><td>140</td><td>500</td></tr>
<tr><td>Quantity ($cm^3$)</td><td>—</td><td>20</td><td>20</td></tr>
<tr><td colspan="2">Catalytic liquid C ($cm^3$)</td><td>—</td><td>10</td><td>10</td></tr>
<tr><td rowspan="10">Polymerization results</td><td colspan="2">Catalytic dispersion used ($cm^3$)</td><td>0.2</td><td>0.3</td><td>0.2</td></tr>
<tr><td colspan="2">Weight polymer obtained (g)</td><td>287</td><td>182</td><td>230</td></tr>
<tr><td colspan="2">Yield (g · pol/g Ti)</td><td>16,000</td><td>20,000</td><td>38,000</td></tr>
<tr><td colspan="2">Melt index E (g/10 min.)</td><td>0.07</td><td>0.07</td><td>0.07</td></tr>
<tr><td colspan="2">Melt index N / Melt index E</td><td>10.2</td><td>9.7</td><td>9.3</td></tr>
<tr><td colspan="2">Tamped bulk density ($g/cm^3$)</td><td>0.23</td><td>0.27</td><td>0.28</td></tr>
<tr><td rowspan="3">Polymer morphology</td><td>Spherical polymer</td><td>NO</td><td>YES</td><td>YES</td></tr>
<tr><td>Particle form polymer</td><td>NO</td><td>YES</td><td>YES</td></tr>
<tr><td>Irregular polymer in powder</td><td>YES</td><td>NO</td><td>NO</td></tr>
</table>

Example 18

The following substances were used for the preparation of the dispersion of the catalytic component:

Baysilon M 100 oil®=30 $cm^3$
n-butyl ether=4.5 $cm^3$
Catalytic component A=30 $cm^3$

The resulting dispersion was introduced into a 2.5 l reactor containing already 1000 $cm^3$ of anhydrous hexane and 0.1 mol of aluminum triisobutyl at the temperature of 40°C. Ethylene was then introduced until a pressure of 0.6 bar was reached. The polymerization starts immediately and causes a temperature increase to 45°C.

While maintaining constant said conditions, ethylene was continuously fed for 30 minutes, i.e. until about 3 g of ethylene are polymerized per gram of catalytic component A. The pre-polymerized catalytic component was then discharged and, after removal of the solvent by filtration, it was subjected to two washings with anhydrous hexane at room temperature.

The catalytic component in hexane suspension was then used in subsequent tests of ethylene polmerization, in order to evaluate the possible variations in performance with respect to the time (ageing).

In Table 4 the results of said tests (ageing of the prepolymerized catalysts: zero days; 5 days; and 13 days) were reported.

Furthermore, some morphological characteristics of the polymers obtained (flowability and particle size distribution) were reported.

In all cases the powders obtained consisted wholly of spherical particles.

In the case of the polymer obtained with aged catalyst, the analysis of the catalytic residues furnished the following results:

Ti=2 ppm
Cl=<25 ppm
Mg=4.6 ppm
Total ashes=0.095%

The polymerization test was carried out in the conditions of Examples 1—8 with the difference that the duration is of 4 hours in place of 2 hours.

TABLE 4

| Ageing of the prepolymerized catalyst | | Zero days | 5 days | 13 days |
|---|---|---|---|---|
| Yield (g polymer/g Ti) | | 313,000 | 340,000 | 315,000 |
| Melt index E (g/10 min.) | | 0.23 | 0.14 | 0.2 |
| Melt index N / Melt index E | | 8 | 8.3 | 8.3 |
| Tamped bulk density (g/cm³) | | 0.4 | 0.41 | 0.4 |
| Flowability (sec.) | | 17.5 | 17 | 18 |
| Particle size distribution (% by weight) | >1000 μm (and <2000 μm) | 25.1 | 30.4 | 30.2 |
| | >500 μm % | 53.3 | 52.1 | 54 |
| | >177 μm % | 19.7 | 16.7 | 15 |
| | >105 μm % | 1.6 | 0.5 | 0.5 |
| | <105 μm % | 0.3 | 0.3 | 0.3 |

Example 19

300 g of polyethylene obtained according to Example 18 (ageing time of 5 days) were introduced into a 3 liter stainless steel autoclave fitted with an anchor-shaped stirrer. After heating at 80°C for 1 hour under a flow nitrogen and under stirring at intervals, the polymer was subjected to treatment with 0.5 g of aluminum triisobutyl diluted in 500 g of propylene. The mixture was stirred at 70°C for 2 hours and then all propylene was removed slowly. 0.634 g of prepolymerized catalyst (obtained as described in Example 18) and then, at the temperature of 60°C, 1 g of aluminum triisobutyl dissolved in 20 $cm^3$ pentane were charged into the reactor.

The reactor was heated at 75°C and while maintained under stirring was charged with 1.8 bar of hydrogen and then with ethylene up to a total pressure of 9 bar. The pressure was maintained constant during the polymerization by continuous addition of ethylene.

After 4 hours, the reactor was degassed and the dry polymer was collected which weighed 578 g. The yield was 231,000 g polymer/g titanium used.

The morphology of the obtained polymer was wholly spherical. The tamped bulk density was 0.38 $g/cm^3$. The flowability was 18 seconds.

The particle size distribution was as follows:

| | | |
|---|---|---|
| φ | >1000 μm (and <2000 μm) | =33.5 % by weight |
| φ | >500 μm | =59.4 % by weight |
| φ | >177 μm | = 6.6 % by weight |
| φ | >105 μm | = 0.4 % by weight |
| φ | <105 μm | = 0.1 % by weight |

Example 20

Two polymerization tests were carried out, one in hexane and the other in isobutane, and both were carried out in the presence of butene-1 in different amount.

In the two tests it was utilized a prepolymerized catalyst from the same preparation used for the polymerizations reported in Table 4, except that it had 90 days of ageing. The autoclave used was entirely similar to that of the preceding polymerization, except that it had a 1.5 l capacity in place of 2.5 l.

Polymerization in hexane

Anhydrous hexane containing Al-triisobutyl and the weight catalyst were charged into the autoclave duly flushed with nitrogen.

The reactor was heated at 70°C and then flowed with hydrogen and pressurized with the same up to 3 bar. Simultaneously 18 g of butene-1 and ethylene up to a total pressure of 14 bar were introduced. The pressure was maintained constant by introducing continuously ethylene and butene, the latter one in an amount of 0.6 g per each 30 g of ethylene fed.

After 2 hours polymerization, the reactor was degassed and cooled by stripping with steam. The polymer was recovered from the slurry and then dried at 70°C in a nitrogen flow for 12 hours.

Polymerization in isobutane

20 $cm^3$ hexane containing the catalyst and Al-triisobutyl were charged into the flushed autoclave wherein a flow of isobutane is maintained. Then also isobutane in liquid state was introduced. The reactor was heated at 70°C (isobutane pressure=10 bar). 4 bar of hydrogen were introduced therein and simultaneously 180 g of butene-1 and ethylene up to a total pressure of 29.5 bar. The polymerization was continued in these conditions for 2 hours, by adding 2.95 g of butene-1 per each 30 g of ethylene fed. The reactor was degassed and cooled to room temperature. The polymer was recovered and dried at 70°C in a nitrogen flow for 12 hours.

The data concerning both tests and the results were reported in Table 5.

TABLE 5

| Polymerization in | | Hexane | Isobutane |
|---|---|---|---|
| Hexane ($cm^3$) | | 700 | 20 |
| Isobutane (g) | | — | 220 |
| Al-triisobutyl (g) | | 1 | 1 |
| Prepolymerized catalyst (g) | | 0.3 | 0.625 |
| Butene-1 (g) | initial feed | 18 | 180 |
| Butene-1 (g) | total feed | 19.2 | 194.75 |
| Obtained polymer (g) | | 65 | 175 |
| Yield (g/g Ti) | | 114,000 | 147,000 |
| Melt index E (g/10 min.) | | 0.17 | 1.6 |
| N/E | | 10.6 | 7.6 |
| F/E | | 31.2 | 25.6 |
| Bonded butene (% by weight) | | <2 | 4.5 |
| Density ($g/cm^3$) | | 0.9394 | 0.9262 |
| Bulk density (Tamped) ($g/cm^3$) | | 0.31 | 0.33 |
| Flowability of the polymer (sec.) | | 23 | 24.4 |
| Morphology | | wholly spherical | wholly spherical |
| Particle size | >2000 µm (% by weight) | 0.9 | 1.4 |
| Particle size | >1000 µm (% by weight) | 26.1 | 23 |
| Particle size | >420 µm (% by weight) | 52.9 | 57.2 |
| Particle size | >250 µm (% by weight) | 12.8 | 12.3 |
| Particle size | >149 µm (% by weight) | 5.3 | 4.4 |
| Particle size | >105 µm (% by weight) | 1.2 | 1.0 |
| Particle size | <105 µm (% by weight) | 0.8 | 0.7 |

Excluding silicon oil, the carbon of the chemical structures of the dispersing oils used in Examples 5 and 11, respectively 6 and 12; 7 and 13; and respectively 8 and 14 is distributed percentwise as follows:

| Oil | Aromatic carbon | Naphthenic carbon | Paraffinic carbon |
|---|---|---|---|
| Vaselin OB 55® | — | — | 100 |
| Cortis 100 M® | 7 | 28 | 65 |
| Circosol 2XH® | 20 | 39 | 41 |
| Dutrex R 55® | 49 | 35.5 | 17.5 |

## Claims

1. Process for preparing catalytic components in the form of emulsions or dispersions in an inert liquid medium or in an inert gas phase of a liquid phase, suited for polymerization of ethylene or mixtures thereof with minor amounts of alphaolefins, comprising a magnesium halide and compounds of titanium, immiscible with aliphatic hydrocarbons, characterized in that a dispersed liquid phase comprising said titanium compounds and/or magnesium halide, is emulsified with an inert liquid medium or inert gas phase of a liquid phase, without any intermediate separation of a solid phase, with the proviso that the emulsion not comprising the titanium compound is subsequently subjected to reaction with the titanium compound.

2. Process according to the preceding claims, characterized in that the dispersed liquid phase comprises compounds of Ti and Mg.

3. Process according to claim 2, characterized in that the dispersed liquid phase containing the Ti and Mg compound is obtained by reacting an anhydrous halide of Ti and Mg and an aluminum halide or alkyldihalide in an aromatic liquid hydrocarbon, in the presence of a halogenated hydrocarbon or by reacting an anhydrous halide of Mg and a Ti alcoholate, in the presence of an anhydrous hydrohalogenic acid.

4. Process according to claim 2, characterized in that the Ti and Mg compound has the formula:

$$MgX_2 \cdot TiX_pY_q \cdot nED$$

wherein X is a halogen; Y is a radical OR (R=alkyl, cycloalkyl or aryl group containing from 1 to 18 carbon atoms); p is a number from 1 to 4; q is a number from 0 to 3; p+q=4; n is a number from 3 to 6; ED is an electron-donor compound.

5. Process according to the preceding claims, characterized in that the compound or composition containing the titanium compound is subjected to reactions and/or to modifying treatments before the use of the emulsion or dispersion as catalyst component.

6. Process according claim 5, characterized in that the emulsion or dispersion is reacted with compounds selected from the Al-alkyl compounds, preferably in the presence of an olefin or from the silicon compounds and the electron-donor compounds.

7. Process according to claim 1, characterized in that a compound or a composition containing a Mg compound as a precursor of the catalytic component is emulsified.

8. Process according to claim 7, characterized in that the Mg compound is selected from the adducts of a Mg halide with an electron-donor compound, preferably an aliphatic, cycloaliphatic or alkylaryl alcohol.

9. Process according to claims 7 and 8, characterized in that the emulsion or dispersion of the compound or composition containing a Mg compound as a precursor of the catalytic component is reacted with a compound selected from the Ti halides, the Al-alkyl compounds and the halogenated Si compounds.

10. Process according to claim 1, characterized in that the aliphatic hydrocarbon-immiscible liquid compound of the titanium is adsorbed on solid porous supports having a controlled morphology and/or particle size.

11. Catalysts for the polymerization of ethylene and of the mixtures thereof with alpha-olefins which comprise the reaction product of an organometal compound of Al and a catalyst component obtained according to any one of the preceding claims 1 to 10.

## Patentansprüche

1. Verfahren zur Herstellung katalytischer Komponenten in Form von Emulsionen oder Dispersionen in einem inerten flüssigen Medium oder in einer Inertgasphase einer flüssigen Phase für die Polymerisation von Ethylen oder von dessen Mischungen mit geringeren Mengen an Alphaolefinen, enthaltend ein Magnesiumhalogenid und Titanverbindungen, die mit aliphatischen Kohlenwasserstoffen nicht mischbar sind, dadurch gekennzeichnet, daß eine dispergierte flüssige Phase, die die Titanverbindungen und/oder Magnesiumhalogenid enthält, mit einem inerten flüssigen Medium oder einer Inertgasphase einer flüssigen Phase ohne irgendeine intermediäre Abtrennung einer festen Phase emulgiert wird, mit der Maßgabe, daß die die Titanverbindung nicht enthaltende Emulsion anschließend einer Reaktion mit der Titanverbindung unterzogen wird.

2. Verfahren gemäß dem vorhergehenden Anspruch, dadurch gekennzeichnet, daß die dispergierte flüssige Phase Verbindungen von Ti und Mg enthält.

3. Verfahren gemäß Anspruch 2, dadurch gekennzeichnet, daß die die Ti- und Mg-Verbindung enthaltende dispergierte flüssige Phase erhalten wird durch Umsetzung eines wasserfreien Halogenids von Ti und Mg und eines Aluminiumhalogenids oder -alkyldihalogenids in einem aromatischen flüssigen Kohlenwasserstoff in Gegenwart eines halogenierten Kohlenwasserstoffs oder durch Umsetzung eines wasserfreien Halogenids von Mg und eines Ti-Alkoholats in Gegenwart einer wasserfreien Halogenwasserstoffsäure.

4. Verfahren gemäß Anspruch 2, dadurch gekennzeichnet, daß die Ti- und Mg-Verbindung die Formel

$$MgX_2 \cdot TiX_pY_q \cdot nED$$

aufweist, worin X für ein Halogen steht; Y einen Rest OR bedeutet (R=eine Alkyl-, Cycloalkyl- oder Arylgruppe mit 1 bis 18 Kohlenstoffatomen); p für eine Zahl von 1 bis 4 steht; q für eine Zahl von 0 bis 3 steht; p+q=4; n eine Zahl von 3 bis 6 bedeutet; ED eine Elektronendonor-Verbindung angibt.

5. Verfahren gemäß den vorhergehenden Ansprüchen, dadurch gekennzeichnet, daß die die Titanverbindung enthaltende Verbindung oder Zusammensetzung Reaktionen und/oder modifizierenden Behandlungen vor der Verwendung der Emulsion oder Dispersion als Katalysatorkomponente unterzogen wird.

6. Verfahren gemäß Anspruch 5, dadurch gekennzeichnet, daß die Emulsion oder Dispersion mit Verbindungen, ausgewählt unter Al-Alkyl-Verbindungen, vorzugsweise in Gegenwart eines Olefins, oder unter Siliciumverbindungen und Elektronendonor - Verbindungen, umgesetzt wird.

7. Verfahren gemäß Anspruch 1, dadurch gekennzeichnet, daß eine eine Mg-Verbindung als Vorläufer der Katalysatorkomponente enthaltende Verbindung oder Zusammensetzung emulgiert wird.

8. Verfahren nach Anspruch 7, dadurch gekennzeichnet, daß die Mg-Verbindung unter den Addukten eines Mg-Halogenids mit einer Elektronendonor - Verbindung, vorzugsweise einem aliphatischen, cycloaliphatischen oder Alkylarylalkohol ausgewählt wird.

9. Verfahren gemäß den Ansprüchen 7 und 8, dadurch gekennzeichnet, daß die Emulsion oder Dispersion der eine Mg-Verbindung als Vorläufer der Katalysatorkomponente enthaltenden Verbindung oder Zusammensetzung mit einer Verbindung, ausgewählt unter den Ti-Halogeniden, den Al-Alkylverbindungen und den halogenierten Si-Verbindungen, umgesetzt wird.

10. Verfahren gemäß Anspruch 1, dadurch gekennzeichnet, daß die mit einem aliphatischen Kohlenwasserstoff nicht mischbare flüssige Titanverbindung auf festen porösen Trägern mit einer kontrollierten Morphologie und/oder Teilchengröße adsorbiert wird.

11. Katalysatoren zur Polymerisation von Ethylen und dessen Mischungen mit Alphaolefinen, die das Reaktionsprodukt einer organometallischen Al-Verbindung und einer Katalysatorkomponente, erhalten gemäß einem der vorhergehenden Ansprüche 1 bis 10, enthält.

**Revendications**

1. Procédé pour préparer des composants catalytiques sous la forme d'émulsions ou de dispersions dans un milieu liquide inerte ou dans une phase gazeuse inerte d'une phase liquide, convenables pour la polymérisation de l'éthylène ou de ses mélanges avec des quantités mineures d'alpha-oléfines, comprenant un halogénure de magnésium et des composés du titane, non miscibles avec des hydrocarbures aliphatiques, caractérisé en ce qu'une phase liquide dispersée comprenant ces composés du titane et/ou cet halogénure de magnésium, est émulsifiée avec un milieu liquide inerte ou une phase gazeuse inerte d'une phase liquide, sans une quelconque séparation intermédiaire d'une phase solide, à condition que l'émulsion ne comprenant pas le composé du titane soit ensuite soumise à une réaction avec le composé de titane.

2. Procédé suivant la revendication 1, caractérisé en ce que la phase liquide dispersée comprend des composés de Ti et de Mg.

3. Procédé suivant la revendication 2, caractérisé en ce que la phase liquide dispersée comprenant le composé de Ti et de Mg est obtenue par la réaction d'un halogénure anhydre de Ti et de Mg et d'un halogénure d'aluminium ou d'un dihalogénure d'Al-alkyle dans un hydrocabure aromatique liquide, en présence d'un hydrocarbure halogéné ou par la réaction d'un halogénure anhydre de Mg et d'un alcoolate de Ti, en présence d'un acide halohydrique anhydre.

4. Procédé suivant la revendication 2, caractérisé en ce que le composé de Ti et de Mg a la formule:

$$MgX_2 \cdot TiX_pYq \cdot nED$$

dans laquelle X est un atome d'halogène; Y est un radical OR dans lequel R est un groupe alkyle, cycloalkyle ou aryle contenant de 1 à 18 atomes de carbone; p est un nombre de 1 à 4; q est un nombre de zéro à 3; p+q=4; n est un nombre de 3 à 6; ED est un composé donneur d'électrons.

5. Procédé suivant les revendications précédentes, caractérisé en ce que le composé ou la composition contenant le composé du titane est soumis à des réactions et/ou à des traitements de modification avant l'emploi de l'émulsion ou de la dispersion en tant que composant de catalyseur.

6. Procédé suivant la revendication 5, caractérisé en ce que l'émulsion ou la dispersion est traitée avec des composés choisis parmi les composés d'Al-alkyle, de préférence en présence d'une oléfine ou parmi les composés du silicium et les composés donneurs d'électrons.

7. Procédé suivant la revendication 1, caractérisé en ce qu'on émulsifie un composé ou une composition contenant un composé de Mg en tant que précuseur du composant catalytique.

8. Procédé suivant la revendication 7, caractérisé en ce que le composé de Mg est choisi parmi les adducts d'un halogénure de Mg avec un composé donneur d'électrons, de préférence un alcool aliphatique, cycloaliphatique ou alkylarylique.

9. Procédé suivant les revendications 7 et 8, caractérisé en ce que l'émulsion ou la dispersion du

composé ou de la composition contenant un composé du Mg comme précursor du composant catalytique, est traitée avec un composé choisi parmi les halogénures de Ti, les composés d'Al-alkyle et les composés halogénés du Si.

10. Procédé suivant la revendication 1, caractérisé en ce que le composé liquide du titane non miscible dans un hydrocarbure aliphatique, est adsorbé sur des supports poreux solides dont on maîtrise la morphologie et/ou la granulométrie.

11. Catalyseurs pour la polymérisation de l'éthylène et de ses mélanges avec des alpha-oléfines, caractérisés en ce qu'ils comprennent le produit de réaction d'un composé organométallique d'Al et d'un composant de catalyseur obtenu selon l'une quelconque des revendications 1 à 10.